# EUROPEAN PATENT APPLICATION

(11) **EP 4 683 459 A1**
(43) Date of publication of application: **21.01.2026**
(21) Application number: 25162932.5
(22) Date of filing: 11.03.2025
(51) Int. Cl.: H10D 89/10, H01L 23/528, H10D 84/90, G06F 30/392

(54) **SEMICONDUCTOR DEVICE**

(30) Priority: 19.07.2024 KR 20240095682
(71) Applicant: Samsung Electronics Co., Ltd., Suwon-si, Gyeonggi-do 16677 (KR)
(72) Inventor: LEE, Jung Han, 16677 Suwon-si (KR); PARK, Jisoo, 16677 Suwon-si (KR); CHUN, Kwanyoung, 16677 Suwon-si (KR); KANG, Byungju, 16677 Suwon-si (KR); KIM, Byung-Sung, 16677 Suwon-si (KR); JEONG, Jinwoo, 16677 Suwon-si (KR)
(74) Representative: Marks & Clerk LLP

(57) **Abstract**

A semiconductor device includes an upper conductive line, a first lower conductive line, a second lower conductive line, and a third lower conductive line arranged in a first direction. The semiconductor device also includes a lower active contact connected to one of the first, second, and third lower conductive lines. Further, the semiconductor device includes a first tall cell, a second tall cell, a first small cell, and a second small cell disposed between the upper conductive line and the first, second, and third lower conductive lines and arranged in the first direction. Each of the first and second tall cells includes a tall pattern and a tall source/drain pattern connected to the tall pattern. Each of the first and second small cells includes a small pattern and a small source/drain pattern connected to the small pattern.

## Description

### BACKGROUND

The present disclosure relates to a semiconductor device, and in particular, to a semiconductor device including a fin pattern.

A semiconductor device includes an integrated circuit composed of metal-oxide-semiconductor field-effect transistors (MOSFETs). To meet the increasing demand for semiconductor devices with smaller pattern sizes and reduced design rules, the MOSFETs are being aggressively scaled down. The scaling down of MOSFETs may lead to a deterioration in the operational characteristics of the semiconductor device. Accordingly, a variety of studies are being conducted to overcome the technical limitations associated with the scaling down of the semiconductor device and to improve the performance of the semiconductor device.

### SUMMARY

Some embodiments consistent with the present disclosure provide a semiconductor device with improved electrical and reliability characteristics and a method of fabricating the same.

According to some embodiments consistent with the present disclosure, a semiconductor device may include an upper conductive line, a first lower conductive line, a second lower conductive line, and a third lower conductive line arranged in a first direction, a lower active contact connected to one of the first, second, and third lower conductive lines, and a first tall cell, a second tall cell, a first small cell, and a second small cell disposed between the upper conductive line and the first, second, and third lower conductive lines and arranged in the first direction. Each of the first and second tall cells may include a tall pattern and a tall source/drain pattern connected to the tall pattern. Each of the first and second small cells may include a small pattern and a small source/drain pattern connected to the small pattern. A width of the tall pattern in the first direction may be larger than a width of the small pattern in the first direction, and the lower active contact may be connected to the tall source/drain pattern or the small source/drain pattern.

According to some embodiments consistent with the present disclosure, a semiconductor device may include an upper conductive line, a first lower conductive line, a second lower conductive line, and a third lower conductive line arranged in a first direction, and a first tall cell, a second tall cell, a first small cell, and a second small cell disposed between the upper conductive line and the first, second, and third lower conductive lines and arranged in the first direction. The first lower conductive line may be overlapped with the first tall cell and the second tall cell, the second lower conductive line may be overlapped with the second tall cell and the first small cell, and the third lower conductive line may be overlapped with the first small cell and the second small cell. A width of the first lower conductive line in the first direction may be larger than a width of the second lower conductive line in the first direction, and the width of the second lower conductive line in the first direction may be larger than a width of the third lower conductive line in the first direction.

According to some embodiments consistent with the present disclosure, a semiconductor device may include an upper conductive line extending in a first direction, a gate electrode extending in a second direction crossing the first direction, a first lower conductive line, a second lower conductive line, and a third lower conductive line arranged in the second direction, a first tall pattern, a second tall pattern, a third tall pattern, a fourth tall pattern, a first small pattern, a second small pattern, a third small pattern, and a fourth small pattern disposed between the upper conductive line and the first, second, and third lower conductive lines and arranged in the second direction, a first gate separation layer, a second gate separation layer, a third gate separation layer, a fourth gate separation layer, and a fifth gate separation layer arranged in the second direction, a tall source/drain pattern connected to each of the first, second, third, and fourth tall patterns, a small source/drain pattern connected to each of the first, second, third, and fourth small patterns, and a lower active contact connected to the tall source/drain pattern or the small source/drain pattern. The first and second tall patterns may be disposed between the first and second gate separation layers, and the third and fourth tall patterns may be disposed between the second and third gate separation layers. The first and second small patterns may be disposed between the third and fourth gate separation layers, and the third and fourth small patterns may be disposed between the fourth and fifth gate separation layers. The first lower conductive line may be overlapped with the second gate separation layer, the second tall pattern, and the third tall pattern. The second lower conductive line may be overlapped with the third gate separation layer, the fourth tall pattern, and the first small pattern. The third lower conductive line may be overlapped with the fourth gate separation layer, the second small pattern, and the third small pattern.

At least some of the above and other features of the invention are set out in the claims.

### BRIEF DESCRIPTION OF THE DRAWINGS

FIG. 1A is a plan view illustrating a semiconductor device according to some embodiments consistent with the present disclosure.
FIG. 1B is an enlarged view illustrating a portion Q1 of FIG. 1A, according to some embodiments consistent with the present disclosure.
FIG. 1C is a sectional view taken along a line A-A' of FIG. 1B, according to some embodiments consistent with the present disclosure.
FIG. 1D is a sectional view taken along a line B-B' of FIG. 1B, according to some embodiments consistent with the present disclosure.
FIG. 1E is a sectional view taken along a line C-C' of FIG. 1B, according to some embodiments consistent with the present disclosure.
FIG. 1F is a sectional view taken along a line D-D' of FIG. 1B, according to some embodiments consistent with the present disclosure.
FIG. 1G is a sectional view taken along a line E-E' of FIG. 1B, according to some embodiments consistent with the present disclosure.
FIG. 2 is a plan view illustrating a semiconductor device according to some embodiments consistent with the present disclosure.
FIG. 3 is a sectional view illustrating a semiconductor device according to some embodiments consistent with the present disclosure.

### DETAILED DESCRIPTION

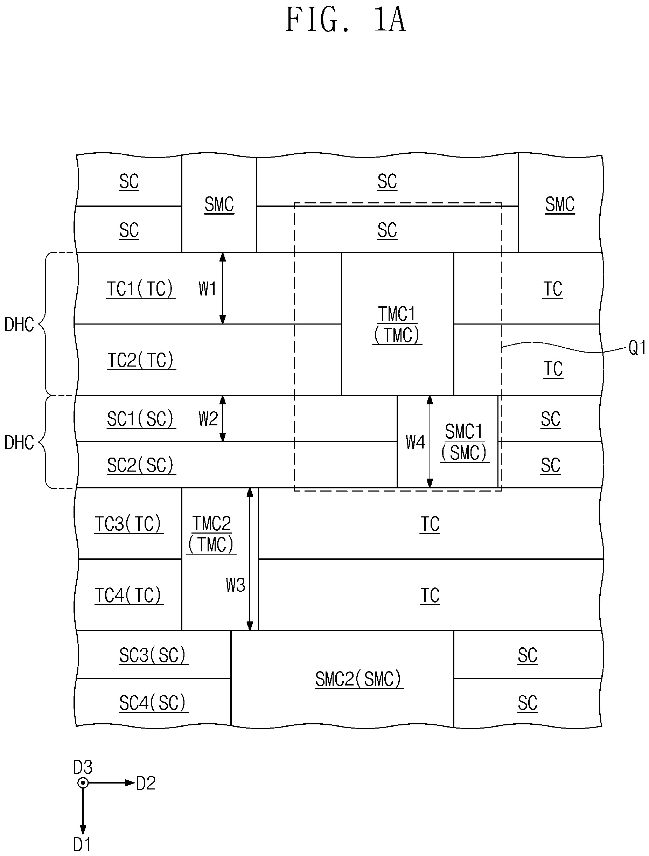

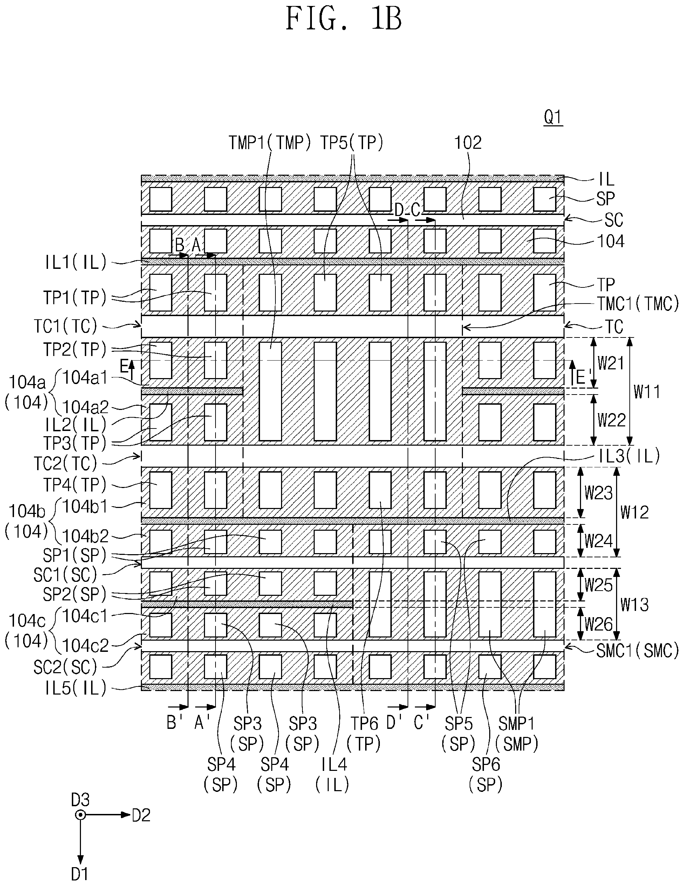

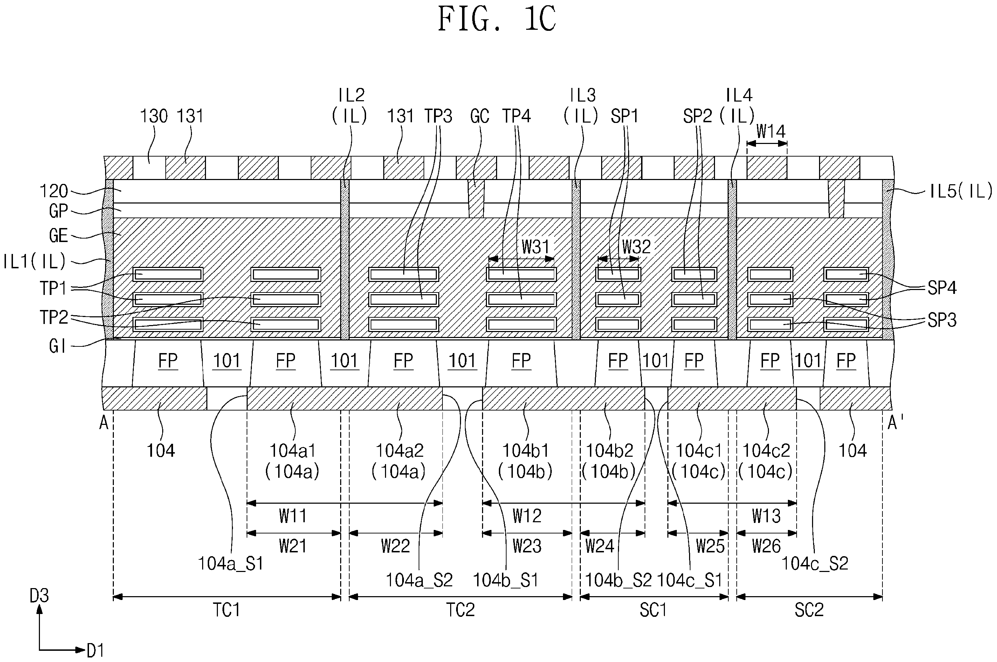

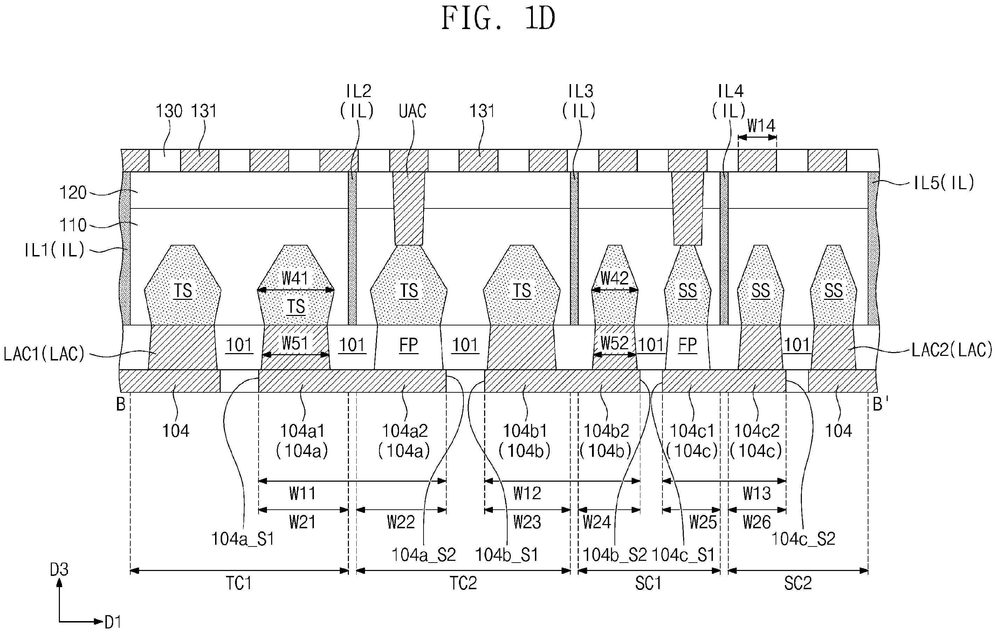

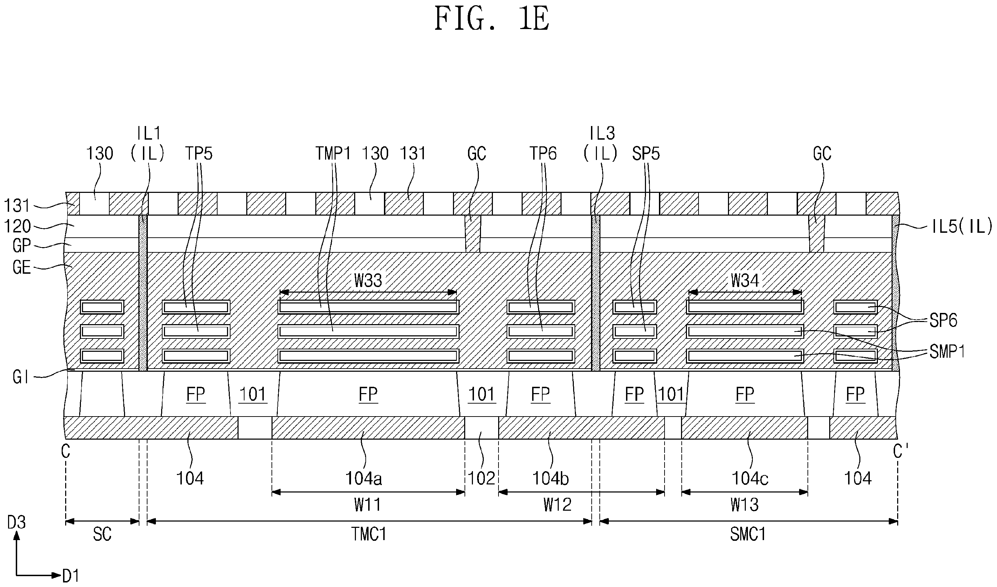

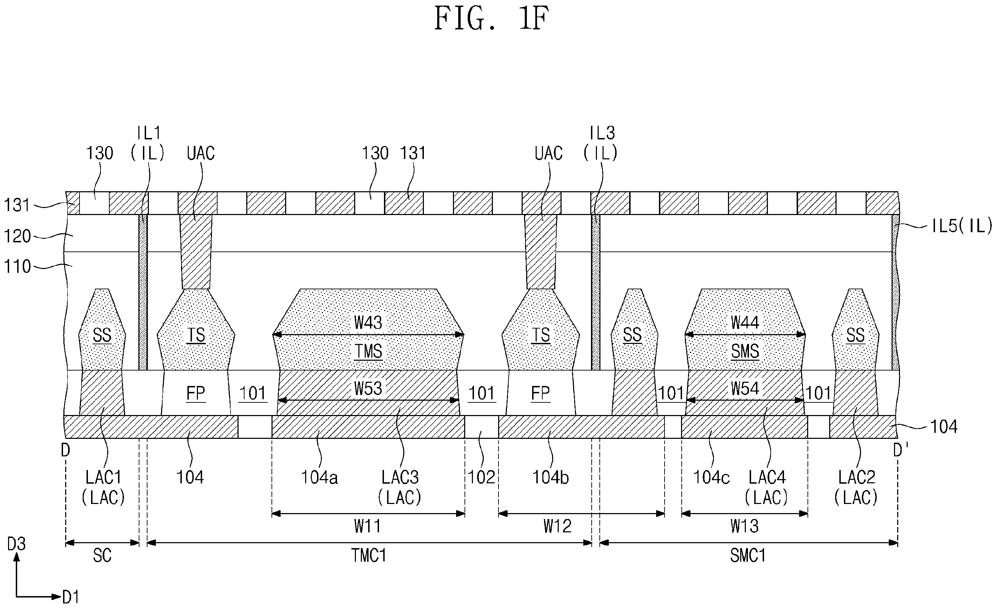

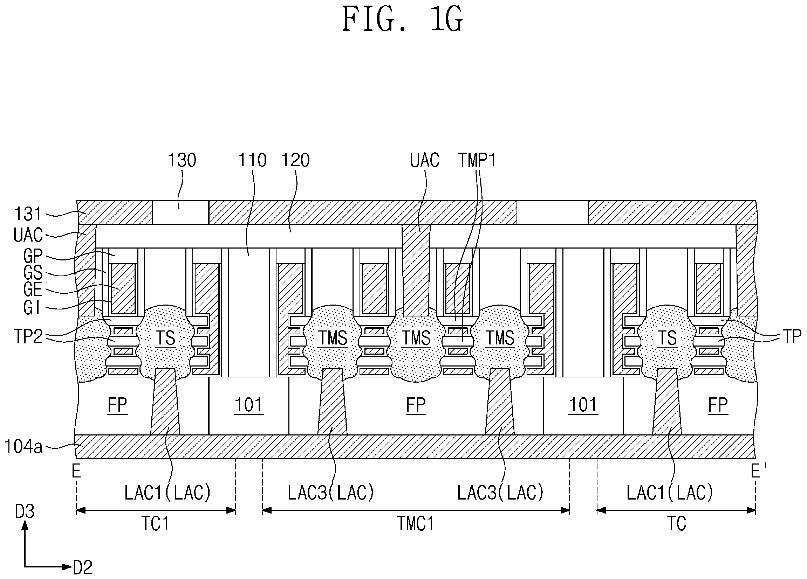

FIG. 1A is a plan view illustrating a semiconductor device according to some embodiments consistent with the present disclosure. FIG. 1B is an enlarged view illustrating a portion Q1 of FIG. 1A, according to some embodiments consistent with the present disclosure. FIG. 1C is a sectional view taken along a line A-A' of FIG. 1B, according to some embodiments consistent with the present disclosure. FIG. 1D is a sectional view taken along a line B-B' of FIG. 1B, according to some embodiments consistent with the present disclosure. FIG. 1E is a sectional view taken along a line C-C' of FIG. 1B, according to some embodiments consistent with the present disclosure. FIG. 1F is a sectional view taken along a line D-D' of FIG. 1B, according to some embodiments consistent with the present disclosure. FIG. 1G is a sectional view taken along a line E-E' of FIG. 1B, according to some embodiments consistent with the present disclosure.

Referring to FIG. 1A, the semiconductor device may include tall cells TC, small cells SC, tall merged cells TMC, and small merged cells SMC. Each of the tall cell TC, the small cell SC, the tall merged cell TMC, and the small merged cell SMC may constitute a logic cell. In the present specification, the logic cell may mean a logic device (e.g., AND, OR, XOR, XNOR, inverter, and so forth), which is configured to execute a specific function. The logic cell may include transistors, which are used to form the logic device.

Two adjacent tall cells TC may constitute a double height cell (DHC). As an example, the tall cells TC may include a first tall cell TC1 and a second tall cell TC2, which are placed adjacent to each other to constitute the double height cell, and a third tall cell TC3 and a fourth tall cell TC4, which are placed adjacent to each other to constitute the double height cell.

Two adjacent ones of the small cells SC may constitute a double height cell (DHC). As an example, the small cells SC may include a first small cell SC1 and a second small cell SC2, which are placed adjacent to each other to constitute the double height cell, and a third small cell SC3 and a fourth small cell SC4, are placed adjacent to each other to constitute the double height cell.

The tall cells TC and the small cells SC may be arranged in a first direction D1. Pairs of the tall cells TC and pairs of the small cells SC may be alternately arranged in the first direction D1. As an example, the first tall cell TC1, the second tall cell TC2, the first small cell SC1, the second small cell SC2, the third tall cell TC3, the fourth tall cell TC4, the third small cell SC3, and the fourth small cell SC4 may be sequentially arranged in the first direction D1.

The first tall cell TC1 and the first small cell SC1 may be adjacent to the second tall cell TC2 in the first direction D1. In other words, cells which are closest to the second tall cell TC2 in the first direction D1, may be the first tall cell TC1 and the first small cell SC1. The second tall cell TC2 and the second small cell SC2 may be adjacent to the first small cell SC1 in the first direction D1.

The second tall cell TC2 and the first small cell SC1 may be disposed between the second small cell SC2 and the first tall cell TC1. The second tall cell TC2 may be disposed between the first tall cell TC1 and the first small cell SC1. The first small cell SC1 may be disposed between the second tall cell TC2 and the second small cell SC2. The first and second small cells SC1 and SC2 may be disposed between the second tall cell TC2 and the third tall cell TC3. The third and fourth tall cells TC3 and TC4 may be disposed between the second small cell SC2 and the third small cell SC3.

The tall merged cell TMC may be disposed between the tall cells TC, which are spaced apart from each other in a second direction D2. The tall merged cell TMC may be adjacent to the tall cell TC in the second direction D2. The tall merged cells TMC may include a first tall merged cell TMC1, which is adjacent to the first and second tall cells TC1 and TC2 in the second direction D2, and a second tall merged cell TMC2, which is adjacent to the third and fourth tall cells TC3 and TC4 in the second direction D2.

The small merged cell SMC may be disposed between the small cells SC, which are spaced apart from each other in the second direction D2. The small merged cell SMC may be adjacent to the small cell SC in the second direction D2. The small merged cells SMC may include a first small merged cell SMC1, which is adjacent to the first and second small cells SC1 and SC2 in the second direction D2, and a second small merged cell SMC2, which is adjacent to the third and fourth small cells SC3 and SC4 in the second direction D2.

A width W1 of the tall cell TC in the first direction D1 may be larger than a width W2 of the small cell SC in the first direction D1. A width W3 of the tall merged cell TMC in the first direction D1 may be two times the width W1 of the tall cell TC in the first direction D1. A width W4 of the small merged cell SMC in the first direction D1 may be two times the width W2 of the small cell SC in the first direction D1. The width W3 of the tall merged cell TMC in the first direction D1 may be larger than the width W4 of the small merged cell SMC in the first direction D1.

Referring to FIGS. 1B, 1C, 1D, 1E, 1F, and 1G, the semiconductor device may include a lower insulating layer 102. The lower insulating layer 102 may include an insulating material. In some embodiments, the lower insulating layer 102 may have a multi-layered structure including a plurality of insulating layers.

The lower insulating layer 102 may be a plate-shaped structure that extends parallel to the first and second directions D1 and D2. The first and second directions D1 and D2 may be not parallel to each other. As an example, the first and second directions D1 and D2 may be horizontal directions that are orthogonal to each other.

In some embodiments, lower conductive lines 104 may be disposed in the lower insulating layer 102. The lower conductive lines 104 may extend in the second direction D2. The lower conductive lines 104 may be arranged to be spaced apart from each other in the first direction D1. The lower conductive lines 104 may be power lines. A source or drain voltage may be provided to the lower conductive lines 104. As an example, a ground voltage or a power voltage may be applied to the lower conductive lines 104. The lower conductive lines 104 may include a conductive material.

In some embodiments, fin patterns FP may be provided on the lower insulating layer 102. The fin patterns FP may extend in the second direction D2. The fin patterns FP may be arranged to be spaced apart from each other in the first direction D1. The fin patterns FP may include an insulating material. As an example, the fin patterns FP may include a nitride material.

In some embodiments, the fin patterns FP may include a semiconductor material. The semiconductor material may be, for example, silicon. In some embodiments, a semiconductor substrate may be provided on the lower insulating layer 102, and the fin patterns FP may be protruding portions of the semiconductor substrate extending in a third direction D3. In this case, the fin patterns FP may be connected to each other by a lower portion of the semiconductor substrate. The third direction D3 may be not parallel to the first and second directions D1 and D2. As an example, the third direction D3 may be a vertical direction that is perpendicular to the first and second directions D1 and D2.

In some embodiments, a device isolation layer 101 may be provided. The device isolation layer 101 may surround the fin patterns FP. The fin patterns FP may be separated from each other by the device isolation layer 101. The device isolation layer 101 may include an insulating material. For example, the device isolation layer 101 may include an oxide material. In some embodiments, the device isolation layer 101 may have a multi-layered structure including a plurality of insulating layers.

The fin patterns FP, which are respectively overlapped with the first tall cell TC1 and the first tall merged cell TMC1 in the third direction D3, may be separated from each other. The device isolation layer 101 may be provided between the fin patterns FP, which are respectively overlapped with the first tall cell TC1 and the first tall merged cell TMC1 in the third direction D3.

The fin patterns FP, which are respectively overlapped with the first small cell SC1 and the first small merged cell SMC1 in the third direction D3, may be spaced apart from each other. The device isolation layer 101 may be provided between the fin patterns FP, which are respectively overlapped with the first small cell SC1 and the first small merged cell SMC1 in the third direction D3.

In some embodiments, lower active contacts LAC may be provided. The lower active contact LAC may be provided on the lower conductive line 104. The lower active contact LAC may be electrically connected to the lower conductive line 104. A bottom surface of the lower active contact LAC may be in contact with a top surface of the lower conductive line 104. The lower active contact LAC may be provided to penetrate the fin pattern FP in the third direction D3. The lower active contact LAC may include a conductive material.

The tall cells TC, the small cells SC, the tall merged cells TMC, and the small merged cells SMC may be provided on the fin patterns FP and the device isolation layer 101.

The tall cell TC may include a tall source/drain pattern TS. The small cell SC may include a small source/drain pattern SS. The tall merged cell TMC may include a tall merged source/drain pattern TMS and a tall source/drain pattern TS. The small merged cell SMC may include a small merged source/drain pattern SMS and a small source/drain pattern SS. The tall source/drain pattern TS, the small source/drain pattern SS, the tall merged source/drain pattern TMS, and the small merged source/drain pattern SMS may be provided on the fin patterns FP. The tall source/drain pattern TS, the small source/drain pattern SS, the tall merged source/drain pattern TMS, and the small merged source/drain pattern SMS may be epitaxial patterns formed by a selective epitaxial growth (SEG) process. The tall source/drain pattern TS, the small source/drain pattern SS, the tall merged source/drain pattern TMS, and the small merged source/drain pattern SMS may include a semiconductor material. As an example, the tall source/drain pattern TS, the small source/drain pattern SS, the tall merged source/drain pattern TMS, and the small merged source/drain pattern SMS may be formed of or include at least one of silicon (Si), silicon-germanium (SiGe), or germanium (Ge). The tall source/drain pattern TS, the small source/drain pattern SS, the tall merged source/drain pattern TMS, and the small merged source/drain pattern SMS may be doped with impurities.

The fin patterns FP may be disposed between the lower conductive lines 104 and the tall source/drain pattern TS, the small source/drain pattern SS, the tall merged source/drain pattern TMS, and the small merged source/drain pattern SMS.

The tall cell TC may include tall patterns TP. The small cell SC may include small patterns SP. The tall merged cell TMC may include tall merged patterns TMP and tall patterns TP. The small merged cells SMC may include small merged patterns SMP and small patterns SP. The tall patterns TP may be overlapped with each other in the third direction D3. The small patterns SP may be overlapped with each other in the third direction D3. The tall merged patterns TMP may be overlapped with each other in the third direction D3. The small merged patterns SMP may be overlapped with each other in the third direction D3. The tall patterns TP, the small patterns SP, the tall merged patterns TMP, and the small merged patterns SMP may include a semiconductor material. As an example, the tall patterns TP, the small patterns SP, the tall merged patterns TMP, and the small merged patterns SMP may be formed of or include silicon, silicon-germanium, or germanium.

The tall source/drain pattern TS may be connected to the tall patterns TP. The small source/drain pattern SS may be connected to the small patterns SP. The tall merged source/drain pattern TMS may be connected to the tall merged patterns TMP. The small merged source/drain pattern SMS may be connected to the small merged patterns SMP.

Each of the tall cell TC, the small cell SC, the tall merged cell TMC, and the small merged cell SMC may include a gate electrode GE. The gate electrode GE may be provided to cross the fin pattern FP. The gate electrode GE may overlap with the fin pattern FP in the third direction D3. The gate electrode GE may extend in the first direction D1. The gate electrode GE may be overlapped with the tall pattern TP, the small pattern SP, the tall merged pattern TMP, or the small merged pattern SMP in the third direction D3. The gate electrode GE in conjunction with the tall pattern TP, the small pattern SP, the tall merged pattern TMP, or the small merged pattern SMP may form a three-dimensional field-effect transistor (e.g., Multi-Bridge Channel FET (MBCFET) or Gate-All-Around FET (GAAFET)).

In some embodiments, gate separation layers IL may be provided. The gate separation layers IL may extend in the second direction D2. The gate separation layer IL may be disposed between the gate electrodes GE. The gate separation layer IL may include an insulating material. As an example, the gate separation layer IL may be formed of or include a nitride material.

Each of the tall cell TC, the small cell SC, the tall merged cell TMC, and the small merged cell SMC may include a gate insulating layer GI. The gate insulating layer GI may be in contact with the gate electrode GE. The gate insulating layer GI may include an insulating material. As an example, the gate insulating layer GI may be formed of or include an oxide material.

Each of the tall cell TC, the small cell SC, the tall merged cell TMC, and the small merged cell SMC may include a gate spacer GS. A pair of gate spacers GS may be disposed on opposite side surfaces of the gate electrode GE. The gate spacers GS may extend in the first direction D1. The gate spacers GS may include an insulating material.

Each of the tall cell TC, the small cell SC, the tall merged cell TMC, and the small merged cell SMC may include a gate capping pattern GP. The gate capping pattern GP may be provided on the gate electrode GE. The gate capping pattern GP may extend in the first direction D1. The gate capping pattern GP may include an insulating material.

In some embodiments, a first interlayer insulating layer 110 may be provided. The first interlayer insulating layer 110 may be provided on the tall source/drain pattern TS, the small source/drain pattern SS, the tall merged source/drain pattern TMS, the small merged source/drain pattern SMS, and the gate spacer GS. A second interlayer insulating layer 120 may be provided on the first interlayer insulating layer 110. The second interlayer insulating layer 120 may be provided on the first interlayer insulating layer 110, the gate spacers GS, and the gate capping patterns GP. Each of the first and second interlayer insulating layers 110 and 120 may include an insulating material. As an example, at least one of the first and second interlayer insulating layers 110 and 120 may include an oxide material.

In some embodiments, upper active contacts UAC may be provided. The upper active contact UAC may be provided to penetrate the first and second interlayer insulating layers 110 and 120. The upper active contacts UAC may include a conductive material.

In some embodiments, gate contacts GC may be provided. The gate contact GC may be electrically connected to the gate electrode GE. The gate contact GC may be provided to penetrate the second interlayer insulating layer 120 and the gate capping pattern GP. The gate contact GC may include a conductive material.

In some embodiments, an upper insulating layer 130 may be provided on the second interlayer insulating layer 120. The upper insulating layer 130 may include an insulating material.

In some embodiments, upper conductive lines 131 may be provided in the upper insulating layer 130. The upper conductive lines 131 may extend in the second direction D2. The upper conductive lines 131 may be spaced apart from each other in the first direction D1. The upper conductive lines 131 may include a conductive material.

The gate contact GC may be electrically connected to the upper conductive line 131. A top surface of the gate contact GC may be in contact with a bottom surface of the upper conductive line 131. The upper active contact UAC may be electrically connected to the upper conductive line 131. A top surface of the upper active contact UAC may be in contact with the bottom surface of the upper conductive line 131.

The tall cells TC, the small cells SC, the tall merged cells TMC, and the small merged cells SMC may be disposed between the upper conductive lines 131 and the lower conductive lines 104. The tall cells TC, the small cells SC, the tall merged cells TMC, and the small merged cells SMC may be provided at a level that is lower than the upper conductive lines 131 and is higher than the lower conductive lines 104.

The lower conductive lines 104 may include a first lower conductive line 104a, a second lower conductive line 104b, and a third lower conductive line 104c, which are sequentially arranged in the first direction D1. The first tall cell TC1, the second tall cell TC2, the first small cell SC1, the second small cell SC2, the first tall merged cell TMC1, and the first small merged cell SMC1 may be disposed between the first to third lower conductive lines 104a, 104b, and 104c and the upper conductive lines 131.

The first lower conductive line 104a may overlap with the first tall cell TC1, the second tall cell TC2, and the first tall merged cell TMC1 in the third direction D3. The second lower conductive line 104b may overlap with the second tall cell TC2, the first small cell SC1, the first tall merged cell TMC1, and the first small merged cell SMC1 in the third direction D3. The third lower conductive line 104c may overlap with the first small cell SC1, the second small cell SC2, and the first small merged cell SMC1 in the third direction D3.

A width W11 of the first lower conductive line 104a in the first direction D1 may be larger than a width W12 of the second lower conductive line 104b in the first direction D1. The width W12 of the second lower conductive line 104b in the first direction D1 may be larger than a width W13 of the third lower conductive line 104c in the first direction D1. A width W14 of the upper conductive line 131 in the first direction D1 may be smaller than the width W11 of the first lower conductive line 104a in the first direction D1, the width W12 of the second lower conductive line 104b in the first direction D1, and the width W13 of the third lower conductive line 104c in the first direction D1.

A width of the upper conductive line 131 in the second direction D2 may be smaller than a width of the lower conductive line 104 in the second direction D2.

The first lower conductive line 104a may include a first portion 104a1, which may overlap with the first tall cell TC1 in the third direction D3, and a second portion 104a2, which may overlap with the second tall cell TC2 in the third direction D3. A width W21 of the first portion 104a1 of the first lower conductive line 104a in the first direction D1 may be substantially equal to a width W22 of the second portion 104a2 of the first lower conductive line 104a in the first direction D1.

The second lower conductive line 104b may include a first portion 104b1, which may overlap with the second tall cell TC2 and the first tall merged cell TMC1 in the third direction D3, and a second portion 104b2, which may overlap with the first small cell SC1 and the first small merged cell SMC1 in the third direction D3. A width W23 of the first portion 104b1 of the second lower conductive line 104b in the first direction D1 may be larger than a width W24 of the second portion 104b2 of the second lower conductive line 104b in the first direction D1.

The third lower conductive line 104c may include a first portion 104c1, which may overlap with the first small cell SC1 in the third direction D3, and a second portion 104c2, which may overlap with the second small cell SC2 in the third direction D3. A width W25 of the first portion 104c1 of the third lower conductive line 104c in the first direction D1 may be substantially equal to a width W26 of the second portion 104c2 of the third lower conductive line 104c in the first direction D1.

The width W21 of the first portion 104a1 of the first lower conductive line 104a in the first direction D1, the width W22 of the second portion 104a2 of the first lower conductive line 104a in the first direction D1, and the width W23 of the first portion 104b1 of the second lower conductive line 104b in the first direction D1 may be larger than the width W24 of the second portion 104b2 of the second lower conductive line 104b in the first direction D1, the width W25 of the first portion 104c1 of the third lower conductive line 104c in the first direction D1, and the width W26 of the second portion 104c2 of the third lower conductive line 104c in the first direction D1.

The first lower conductive line 104a may include a first side surface 104a_S1, which may overlap with the first tall cell TC1 in the third direction D3, and a second side surface 104a_S2, which may overlap with the second tall cell TC2 in the third direction D3. The first and second side surfaces 104a_S1 and 104a_S2 of the first lower conductive line 104a may extend in the second direction D2. The first and second side surfaces 104a_S1 and 104a_S2 may be opposite side surfaces of the first lower conductive line 104a.

The second lower conductive line 104b may include a first side surface 104b_S1, which may overlap with the second tall cell TC2 in the third direction D3, and a second side surface 104b_S2, which may overlap with the first small cell SC1 in the third direction D3. The first and second side surfaces 104b_S1 and 104b_S2 of the second lower conductive line 104b may extend in the second direction D2. The first and second side surfaces 104b_S1 and 104b_S2 may be opposite side surfaces of the second lower conductive line 104b.

The third lower conductive line 104c may include a first side surface 104c_S1, which may overlap with the first small cell SC1 in the third direction D3, and a second side surface 104c_S2, which may overlap with the second small cell SC2 in the third direction D3. The first and second side surfaces 104c_S1 and 104c_S2 of the third lower conductive line 104c may extend in the second direction D2. The first and second side surfaces 104c_S1 and 104c_S2 may be opposite side surfaces of the third lower conductive line 104c.

The gate separation layers IL may include a first gate separation layer IL1, a second gate separation layer IL2, a third gate separation layer IL3, a fourth gate separation layer IL4, and a fifth gate separation layer IL5, which are sequentially arranged in the first direction D1.

The first tall cell TC1 may be disposed between the first gate separation layer IL1 and the second gate separation layer IL2. The second tall cell TC2 may be disposed between the second gate separation layer IL2 and the third gate separation layer IL3. The first small cell SC1 may be disposed between the third gate separation layer IL3 and the fourth gate separation layer IL4. The second small cell SC2 may be disposed between the fourth gate separation layer IL4 and the fifth gate separation layer IL5. The first tall merged cell TMC1 may be disposed between the first gate separation layer IL1 and the third gate separation layer IL3. The first small merged cell SMC1 may be disposed between the third gate separation layer IL3 and the fifth gate separation layer IL5.

A distance between the first side surface 104a_S1 of the first lower conductive line 104a and the second gate separation layer IL2 in the first direction D1 may be substantially equal to the width W21 of the first portion 104a1 of the first lower conductive line 104a in the first direction D1. A distance between the second side surface 104a_S2 of the first lower conductive line 104a and the second gate separation layer IL2 in the first direction D1 may be substantially equal to the width W22 of the second portion 104a2 of the first lower conductive line 104a in the first direction D1.

A distance between the first side surface 104b_S1 of the second lower conductive line 104b and the third gate separation layer IL3 in the first direction D1 may be substantially equal to the width W23 of the first portion 104b1 of the second lower conductive line 104b in the first direction D1. A distance between the second side surface 104b_S2 of the second lower conductive line 104b and the third gate separation layer IL3 in the first direction D1 may be substantially equal to the width W24 of the second portion 104b2 of the second lower conductive line 104b in the first direction D1.

A distance between the first side surface 104c_S1 of the third lower conductive line 104c and the fourth gate separation layer IL4 in the first direction D1 may be substantially equal to the width W25 of the first portion 104c1 of the third lower conductive line 104c in the first direction D1. A distance between the second side surface 104c_S2 of the third lower conductive line 104c and the fourth gate separation layer IL4 in the first direction D1 may be substantially equal to the width W26 of the second portion 104c2 of the third lower conductive line 104c in the first direction D1.

The distance between the first side surface 104a_S1 of the first lower conductive line 104a and the second gate separation layer IL2 in the first direction D1, the distance between the second side surface 104a_S2 of the first lower conductive line 104a and the second gate separation layer IL2 in the first direction D1, and the distance between the first side surface 104b_S1 of the second lower conductive line 104b and the third gate separation layer IL3 in the first direction D1 may be larger than the distance between the second side surface 104b_S2 of the second lower conductive line 104b and the third gate separation layer IL3 in the first direction D1, the distance between the first side surface 104c_S1 of the third lower conductive line 104c and the fourth gate separation layer IL4 in the first direction D1, and the distance between the second side surface 104c_S2 of the third lower conductive line 104c and the fourth gate separation layer IL4 in the first direction D1.

The first lower conductive line 104a may overlap with the second gate separation layer IL2 in the third direction D3. The second lower conductive line 104b may overlap with the third gate separation layer IL3 in the third direction D3. The third lower conductive line 104c may overlap with the fourth gate separation layer IL4 in the third direction D3.

The first tall cell TC1 may include first tall patterns TP1 and second tall patterns TP2. The second tall cell TC2 may include third tall patterns TP3 and fourth tall patterns TP4. The first small cell SC1 may include first small patterns SP1 and second small patterns SP2. The second small cell SC2 may include third small patterns SP3 and fourth small patterns SP4. The first tall merged cell TMC1 may include fifth tall patterns TP5, sixth tall patterns TP6, and first tall merged patterns TMP1. The first small merged cell SMC1 may include fifth small patterns SP5, sixth small patterns SP6, and first small merged patterns SMP1.

The second tall patterns TP2 may be the tall patterns TP of the first tall cell TC1 adjacent to the second tall cell TC2 in the first direction D1. The third tall patterns TP3 may be the tall patterns TP of the second tall cell TC2 adjacent to the first tall cell TC1 in the first direction D1. The second small patterns SP2 may be the small patterns SP of the first small cell SC1 adjacent to the second small cell SC2 in the first direction D1. The third small patterns SP3 may be the small patterns SP of the second small cell SC2 adjacent to the first small cell SC1 in the first direction D1. The sixth tall patterns TP6 may be the tall patterns TP of the first tall merged cell TMC1 adjacent to the first small cell SC1 or the first small merged cell SMC1 in the first direction D1. The fifth small patterns SP5 may be the small patterns SP of the first small merged cell SMC1 adjacent to the first tall merged cell TMC1 in the first direction D1.

The first tall pattern TP1, the second tall pattern TP2, the third tall pattern TP3, the fourth tall pattern TP4, the first small pattern SP1, the second small pattern SP2, the third small pattern SP3, and the fourth small pattern SP4 may be sequentially arranged in the first direction D1.

The fifth tall pattern TP5, the first tall merged pattern TMP1, the sixth tall pattern TP6, the first small pattern SP1, the second small pattern SP2, the third small pattern SP3, and the fourth small pattern SP4 may be sequentially arranged in the first direction D1.

The fifth tall pattern TP5, the first tall merged pattern TMP1, the sixth tall pattern TP6, the fifth small pattern SP5, the first small merged pattern SMP1, and the sixth small pattern SP6 may be sequentially arranged in the first direction D1.

The first tall merged pattern TMP1 may be disposed between the fifth tall pattern TP5 and the sixth tall pattern TP6. The first small merged pattern SMP1 may be disposed between the fifth small pattern SP5 and the sixth small pattern SP6.

The second tall pattern TP2, the third tall pattern TP3, and the first tall merged pattern TMP1 may overlap with the first lower conductive line 104a in the third direction D3. The fourth tall pattern TP4, the sixth tall pattern TP6, the first small pattern SP1, and the fifth small pattern SP5 may overlap with the second lower conductive line 104b in the third direction D3. The second small pattern SP2, the third small pattern SP3, and the first small merged pattern SMP1 may overlap with the third lower conductive line 104c in the third direction D3.

A width of the tall pattern TP in the first direction D1 may be larger than a width of the small pattern SP in the first direction D1. As an example, a width W31 of the fourth tall pattern TP4 in the first direction D1 may be larger than a width W32 of the first small pattern SP1 in the first direction D1.

In some embodiments, a distance between the fourth tall pattern TP4 and the third gate separation layer IL3 in the first direction D1 may be larger than a distance between the first small pattern SP1 and the third gate separation layer IL3 in the first direction D1.

A width of the tall merged pattern TMP in the first direction D1 may be larger than a width of the small merged pattern SMP in the first direction D1. As an example, a width W33 of the first tall merged pattern TMP1 in the first direction D1 may be larger than a width W34 of the first small merged pattern SMP1 in the first direction D1.

The width of the tall merged pattern TMP in the first direction D1 may be larger than two times the width of the tall pattern TP in the first direction D1. The width W33 of the first tall merged pattern TMP1 in the first direction D1 may be larger than two times the width W31 of the fourth tall pattern TP4 in the first direction D1.

The width of the small merged pattern SMP in the first direction D1 may be larger than two times the width of the small pattern SP in the first direction D1. The width W34 of the first small merged pattern SMP1 in the first direction D1 may be larger than two times the width W32 of the first small pattern SP1 in the first direction D1.

The tall patterns TP may have substantially the same width in the first direction D1. The small patterns SP may have substantially the same width in the first direction D1. The tall merged patterns TMP may have substantially the same width in the first direction D1. The small merged patterns SMP may have substantially the same width in the first direction D1.

The first and second tall patterns TP1 and TP2 may be disposed between the first and second gate separation layers IL1 and IL2. The third and fourth tall patterns TP3 and TP4 may be disposed between the second and third gate separation layers IL2 and IL3. The first and second small patterns SP1 and SP2 may be disposed between the third and fourth gate separation layers IL3 and IL4. The third and fourth small patterns SP3 and SP4 may be disposed between the fourth and fifth gate separation layers IL4 and IL5.

The fifth tall pattern TP5, the first tall merged pattern TMP1, and the sixth tall pattern TP6 may be disposed between the first and third gate separation layers IL1 and IL3. The fifth small pattern SP5, the first small merged pattern SMP1, and the sixth small pattern SP6 may be disposed between the third and fifth gate separation layers IL3 and IL5. The first tall merged pattern TMP1 may be spaced apart from the second gate separation layer IL2 in the second direction D2. The first small merged pattern SMP1 may be spaced apart from the fourth gate separation layer IL4 in the second direction D2.

The largest width W41 of the tall source/drain pattern TS in the first direction D1 may be larger than the largest width W42 of the small source/drain pattern SS in the first direction D1. The largest width W43 of the tall merged source/drain pattern TMS in the first direction D1 may be larger than the largest width W41 of the tall source/drain pattern TS in the first direction D1, the largest width W42 of the small source/drain pattern SS in the first direction D1, and the largest width W44 of the small merged source/drain pattern SMS in the first direction D1. The largest width W44 of the small merged source/drain pattern SMS in the first direction D1 may be larger than the largest width W42 of the small source/drain pattern SS in the first direction D1.

The lower active contacts LAC may include first lower active contacts LAC1 connected to the tall source/drain patterns TS, second lower active contacts LAC2 connected to the small source/drain patterns SS, third lower active contacts LAC3 connected to the tall merged source/drain patterns TMS, and fourth lower active contacts LAC4 connected to the small merged source/drain patterns SMS.

The first lower active contacts LAC1 may include the first lower active contact LAC1 connected to the first lower conductive line 104a and the first lower active contact LAC1 connected to the second lower conductive line 104b.

The second lower active contacts LAC2 may include the second lower active contact LAC2 connected to the second lower conductive line 104b and the second lower active contact LAC2 connected to the third lower conductive line 104c.

The third lower active contacts LAC3 may include the third lower active contact LAC3 connected to the first lower conductive line 104a. The fourth lower active contacts LAC4 may include the fourth lower active contact LAC4 connected to the third lower conductive line 104c.

A width W51 of the first lower active contact LAC1 in the first direction D1 may be larger than a width W52 of the second lower active contact LAC2 in the first direction D1. A width W53 of the third lower active contact LAC3 in the first direction D1 may be larger than the width W51 of the first lower active contact LAC1 in the first direction D1, the width W52 of the second lower active contact LAC2 in the first direction D1, and a width W54 of the fourth lower active contact LAC4 in the first direction D1. The width W54 of the fourth lower active contact LAC4 in the first direction D1 may be larger than the width W52 of the second lower active contact LAC2 in the first direction D1.

Each of the tall source/drain pattern TS, the small source/drain pattern SS, the tall merged source/drain pattern TMS, and the small merged source/drain pattern SMS may be connected to the lower active contact LAC or the upper active contact UAC. Each of the tall source/drain pattern TS, the small source/drain pattern SS, the tall merged source/drain pattern TMS, and the small merged source/drain pattern SMS may be in contact with the lower active contact LAC or the upper active contact UAC.

In the semiconductor device according to some embodiments consistent with the present disclosure, since the pairs of the tall cells TC and the pairs of the small cells SC are alternately arranged, it may be possible to increase the power supply efficiency and improve the transistor's frequency characteristics. Since the lower conductive lines 104 may be placed on a backside of a substrate, it may be possible to efficiently provide the power voltage, and this may make it possible to alternately place pairs of the tall cells TC and pairs of the small cells SC, rather than to place the tall and small cells TC and SC alternately.

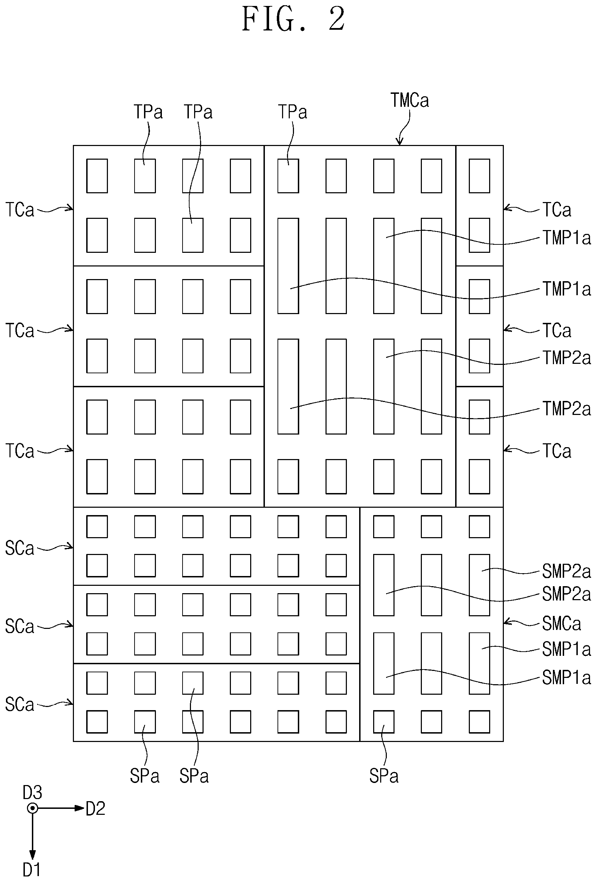

FIG. 2 is a plan view illustrating a semiconductor device according to some embodiments consistent with the present disclosure. The semiconductor device of FIG. 2 may have similar features to the semiconductor device of FIGS. 1A to 1G, except for the features described below.

Referring to FIG. 2, the semiconductor device may include tall cells TCa, small cells SCa, a tall merged cell TMCa, and a small merged cell SMCa.

A width of the tall merged cell TMCa in the first direction D1 may be substantially equal to a sum of widths of three tall cells TCa in the first direction D1. A width of the small merged cell SMCa in the first direction D1 may be substantially equal to a sum of widths of three small cells SCa in the first direction D1.

The tall merged cell TMCa may have a structure in which three tall cells TCa are merged. In some embodiments, the tall merged cell TMCa may have a structure in which four or more tall cells TCa are merged. The small merged cell SMCa may have a structure in which three small cells SCa are merged. In some embodiments, the small merged cell SMCa may have a structure in which four or more small cells SCa are merged.

The tall cell TCa may include tall patterns TPa. The small cell SCa may include small patterns SPa. The tall merged cell TMCa may include tall patterns TPa, first tall merged patterns TMP1a, and second tall merged patterns TMP2a. The first tall merged patterns TMP1a and the second tall merged patterns TMP2a may be disposed between the tall patterns TPa of the tall merged cell TMCa. The tall pattern TPa, the first tall merged pattern TMP1a, and the second tall merged pattern TMP2a of the tall merged cell TMCa may be arranged in the first direction D1.

The small merged cell SMCa may include small patterns SPa, first small merged patterns SMP1a, and second small merged patterns SMP2a. The first small merged patterns SMP1a and the second small merged patterns SMP2a may be disposed between the small patterns SPa of the small merged cell SMCa. The small pattern SPa, the first small merged pattern SMP1a, and the second small merged pattern SMP2a of the small merged cell SMCa may be arranged in the first direction D1.

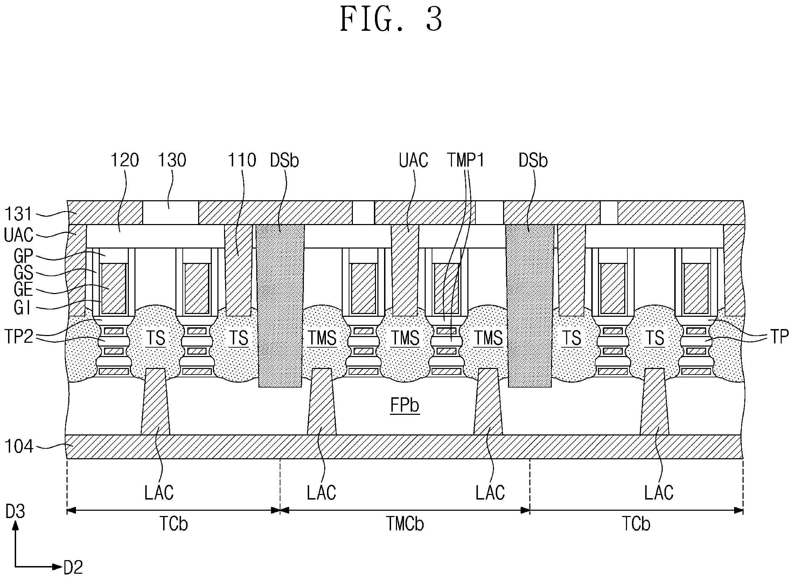

FIG. 3 is a sectional view illustrating a semiconductor device according to some embodiments consistent with the present disclosure. The semiconductor device of FIG. 3 may have similar features to the semiconductor device of FIGS. 1A to 1G, except for the features described below.

Referring to FIG. 3, one fin pattern FPb may be provided to overlap with a tall cell TCb and a tall merged cell TMCb in the third direction D3. The tall cell TCb and the tall merged cell TMCb may be disposed on the fin pattern FPb. A separation structure DSb may be provided between the tall cell TCb and the tall merged cell TMCb. The lowermost portion of the separation structure DSb may be placed in the fin pattern FPb. The separation structure DSb may be in contact with the tall source/drain pattern TS and the tall merged source/drain pattern TMS. The separation structure DSb may include an insulating material.

According to some embodiments consistent with the present disclosure, it may be possible to improve the power supply efficiency of the semiconductor device and the frequency characteristics of the transistor.

While example embodiments consistent with the present disclosure have been particularly shown and described, it will be understood by one of ordinary skill in the art that variations in form and detail may be made therein without departing from the scope of the attached claims.

Embodiments are set out in the following clauses:
Clause 1. A semiconductor device, comprising:
   an upper conductive line;
   a first lower conductive line, a second lower conductive line, and a third lower conductive line arranged in a first direction; and
   a first tall cell, a second tall cell, a first small cell, and a second small cell disposed between the upper conductive line and the first, second, and third lower conductive lines and arranged in the first direction, wherein
   the first lower conductive line overlaps the first tall cell and the second tall cell,
   the second lower conductive line overlaps the second tall cell and the first small cell,
   the third lower conductive line overlaps the first small cell and the second small cell,
   a width of the first lower conductive line in the first direction is larger than a width of the second lower conductive line in the first direction, and
   the width of the second lower conductive line in the first direction is larger than a width of the third lower conductive line in the first direction.
Clause 2. The semiconductor device of clause 1, further comprising:
   a tall merged cell overlapping the first lower conductive line and the second lower conductive line, wherein
   the tall merged cell comprises a tall merged pattern overlapping the first lower conductive line and a first tall pattern overlapping the second lower conductive line, and
   a width of the tall merged pattern in the first direction is larger than a width of the first tall pattern in the first direction.
Clause 3. The semiconductor device of clause 2, wherein
   the first tall cell comprises a second tall pattern, and
   a width of the second tall pattern in the first direction is smaller than the width of the tall merged pattern in the first direction.
Clause 4. The semiconductor device of clause 3, wherein the width of the second tall pattern in the first direction is substantially equal to the width of the first tall pattern in the first direction.
Clause 5. The semiconductor device of any of clauses 2-4, further comprising:
   a first gate separation layer, a second gate separation layer, and a third gate separation layer arranged in the first direction, wherein
   the first tall cell is disposed between the first and second gate separation layers,
   the second tall cell is disposed between the second and third gate separation layers, and
   the tall merged cell is disposed between the first and third gate separation layers.
Clause 6. The semiconductor device of any of clauses 2-5, wherein
   the tall merged cell further comprises a tall merged source/drain pattern connected to the tall merged pattern,
   the first tall cell further comprises a second tall pattern and a tall source/drain pattern connected to the second tall pattern,
   the semiconductor device further comprises:
      a first lower active contact connected to the tall merged source/drain pattern; and
      a second lower active contact connected to the tall source/drain pattern, and
   a width of the first lower active contact in the first direction is larger than a width of the second lower active contact in the first direction.
Clause 7. The semiconductor device of any of clauses 2-6, further comprising:
   a small merged cell overlapping the second lower conductive line and the third lower conductive line, wherein
   the small merged cell comprises a small merged pattern overlapping the third lower conductive line, and
   the width of the tall merged pattern in the first direction is larger than a width of the small merged pattern in the first direction.
Clause 8. The semiconductor device of clause 7, wherein
   the small merged cell further comprises a small pattern overlapping the second lower conductive line, and
   a width of the small pattern in the first direction is smaller than the width of the first tall pattern in the first direction.
Clause 9. The semiconductor device of any preceding clause, further comprising:
   a gate separation layer between the second tall cell and the first small cell, wherein
   the second lower conductive line comprises a first side surface overlapping the second tall cell and a second side surface overlapping the first small cell,
   the first and second side surfaces extend in a second direction crossing the first direction, and
   a distance between the first side surface and the gate separation layer in the first direction is larger than a distance between the second side surface and the gate separation layer in the first direction.
Clause 10. A semiconductor device, comprising:
   an upper conductive line extending in a first direction;
   a gate electrode extending in a second direction crossing the first direction;
   a first lower conductive line, a second lower conductive line, and a third lower conductive line arranged in the second direction;
   a first tall pattern, a second tall pattern, a third tall pattern, a fourth tall pattern, a first small pattern, a second small pattern, a third small pattern, and a fourth small pattern disposed between the upper conductive line and the first, second, and third lower conductive lines and arranged in the second direction;
   a first gate separation layer, a second gate separation layer, a third gate separation layer, a fourth gate separation layer, and a fifth gate separation layer arranged in the second direction;
   a tall source/drain pattern connected to each of the first, second, third, and fourth tall patterns;
   a small source/drain pattern connected to each of the first, second, third, and fourth small patterns; and
   a lower active contact connected to the tall source/drain pattern or the small source/drain pattern,
   wherein
   the first and second tall patterns are disposed between the first and second gate separation layers,
   the third and fourth tall patterns are disposed between the second and third gate separation layers,
   the first and second small patterns are disposed between the third and fourth gate separation layers,
   the third and fourth small patterns are disposed between the fourth and fifth gate separation layers,
   the first lower conductive line overlaps the second gate separation layer, the second tall pattern, and the third tall pattern,
   the second lower conductive line overlaps the third gate separation layer, the fourth tall pattern, and the first small pattern, and
   the third lower conductive line overlaps the fourth gate separation layer, the second small pattern, and the third small pattern.
Clause 11. The semiconductor device of clause 10, further comprising:
   a tall merged pattern overlapped with the first lower conductive line, wherein the tall merged pattern is disposed between the first and third gate separation layers and is spaced apart from the second gate separation layer in the first direction.
Clause 12. The semiconductor device of clause 10 or clause 11, wherein
   a width of the first lower conductive line in the second direction is larger than a width of the second lower conductive line in the second direction,
   the width of the second lower conductive line in the second direction is larger than a width of the third lower conductive line in the second direction,
   the second lower conductive line comprises a first portion overlapping the fourth tall pattern and a second portion overlapping the first small pattern, and
   a width of the first portion of the second lower conductive line in the second direction is larger than a width of the second portion of the second lower conductive line in the second direction.

## Claims

1. A semiconductor device, comprising:
an upper conductive line;
a first lower conductive line, a second lower conductive line, and a third lower conductive line arranged in a first direction;
a lower active contact connected to one of the first, second, and third lower conductive lines; and
a first tall cell, a second tall cell, a first small cell, and a second small cell disposed between the upper conductive line and the first, second, and third lower conductive lines and arranged in the first direction, wherein:
each of the first and second tall cells comprises:
a tall pattern; and
a tall source/drain pattern connected to the tall pattern;
each of the first and second small cells comprises:
a small pattern; and
a small source/drain pattern connected to the small pattern;
a width of the tall pattern in the first direction is larger than a width of the small pattern in the first direction; and
the lower active contact is connected to the tall source/drain pattern or the small source/drain pattern.

2. The semiconductor device of claim 1, wherein the first tall cell and the first small cell are adjacent to the second tall cell in the first direction, and
the second tall cell and the second small cell are adjacent to the first small cell in the first direction.

3. The semiconductor device of claim 1 or claim 2, wherein
the first lower conductive line overlaps the first and second tall cells,
the second lower conductive line overlaps the second tall cell and the first small cell, and
the third lower conductive line overlaps the first small cell and the second small cell.

4. The semiconductor device of claim 3, wherein
a width of the first lower conductive line in the first direction is larger than a width of the second lower conductive line in the first direction, and
the width of the second lower conductive line in the first direction is larger than a width of the third lower conductive line in the first direction.

5. The semiconductor device of claim 3 or claim 4, wherein
the first lower conductive line overlaps the tall pattern of the first tall cell and the tall pattern of the second tall cell,
the second lower conductive line overlaps the tall pattern of the second tall cell and the small pattern of the first small cell, and
the third lower conductive line overlaps the small pattern of the first small cell and the small pattern of the second small cell.

6. The semiconductor device of any preceding claim, wherein the largest width of the tall source/drain pattern in the first direction is larger than the largest width of the small source/drain pattern in the first direction.

7. The semiconductor device of any preceding claim, further comprising:
a fin pattern between the second lower conductive line and the tall source/drain pattern of the second tall cell; and
a device isolation layer surrounding the fin pattern, wherein the lower active contact penetrates the fin pattern.

8. The semiconductor device of any preceding claim, wherein
the second lower conductive line comprises a first portion overlapping with the second tall cell and a second portion overlapping with the first small cell, and
a width of the first portion of the second lower conductive line in the first direction is larger than a width of the second portion of the second lower conductive line in the first direction.

9. The semiconductor device of any preceding claim, further comprising:
a tall merged cell overlapping the first lower conductive line and the second lower conductive line, wherein
the tall merged cell comprises a tall merged pattern overlapping the first lower conductive line and a tall pattern overlapping the second lower conductive line, and
a width of the tall merged pattern in the first direction is larger than a width of the tall pattern of the tall merged cell in the first direction.

10. The semiconductor device of claim 9, wherein a width of the tall pattern of the first tall cell in the first direction is smaller than the width of the tall merged pattern in the first direction.

11. The semiconductor device of claim 10, wherein the width of the tall pattern of the first tall cell in the first direction is substantially equal to the width of the tall pattern of the tall merged cell in the first direction.

12. The semiconductor device of any of claims 9-11, further comprising:
a first gate separation layer, a second gate separation layer, and a third gate separation layer arranged in the first direction, wherein
the first tall cell is disposed between the first and second gate separation layers,
the second tall cell is disposed between the second and third gate separation layers, and
the tall merged cell is disposed between the first and third gate separation layers.

13. The semiconductor device of any of claims 9-12, further comprising:
a small merged cell overlapping the second lower conductive line and the third lower conductive line, wherein
the small merged cell comprises a small merged pattern overlapping the third lower conductive line, and
the width of the tall merged pattern in the first direction is larger than a width of the small merged pattern in the first direction.

14. The semiconductor device of claim 13, wherein
the small merged cell further comprises a small pattern overlapping the second lower conductive line, and
a width of the small pattern of the small merged cell in the first direction is smaller than the width of the tall pattern of the tall merged cell in the first direction.

15. The semiconductor device of any preceding claim, further comprising:
a gate separation layer between the second tall cell and the first small cell, wherein
the second lower conductive line comprises a first side surface overlapping the second tall cell and a second side surface overlapping the first small cell,
the first and second side surfaces extend in a second direction crossing the first direction, and
a distance between the first side surface and the gate separation layer in the first direction is larger than a distance between the second side surface and the gate separation layer in the first direction.
